# EUROPÄISCHE PATENTSCHRIFT

(11) **EP 3 448 163 B1**
(45) Veröffentlichungstag und Bekanntmachung des Hinweises auf die Patenterteilung: **06.04.2022**
(21) Anmeldenummer: 17718922.2
(22) Anmeldetag: 24.04.2017
(51) Int. Cl.: A22C 25/12, A22C 25/08

(54) **VERFAHREN UND VORRICHTUNG ZUR ERKENNUNG DER BAUCH-/RÜCKENLAGE VON MITTELS EINER FÖRDEREINRICHTUNG GEFÖRDERTEN FISCHEN**
METHOD AND DEVICE FOR DETECTING THE PRONE/SUPINE POSITION OF FISH CONVEYED BY MEANS OF A CONVEYING DEVICE
PROCÉDÉ ET DISPOSITIF POUR IDENTIFIER LA POSITION VENTRALE/DORSALE DE POISSONS ACHEMINÉS AU MOYEN D'UN DISPOSITIF DE TRANSPORT

(30) Priorität: 26.04.2016 DE 102016107687
(43) Veröffentlichungstag der Anmeldung: 06.03.2019
(73) Patentinhaber: Nordischer Maschinenbau Rud. Baader GmbH + Co. KG, 23560 Lübeck (DE)
(72) Erfinder: SCHUBERT, Frank, 22359 Hamburg (DE); HERBST, Jan-Patrick, 23795 Groß Rönnau (DE)
(74) Vertreter: Stork Bamberger Patentanwälte PartmbB
(86) Internationale Anmeldenummer: PCT/EP2017/059616
(87) Internationale Veröffentlichungsnummer: WO 2017/186622

(56) Entgegenhaltungen:
- EP-A1- 3 000 325
- WO-A1-2014/128230
- DE-A1-102005 007 150
- US-A- 5 115 903
- US-A1- 2008 144 011

## Beschreibung

Die vorliegende Erfindung betrifft ein Verfahren zur Erkennung der Bauch-/Rückenlage von mittels einer Fördereinrichtung geförderten Fischen. Des Weiteren betrifft die vorliegende Erfindung ein Verfahren zum Überwachen der lagegerechten Übergabe von Fischen von einem Querförderer an mindestens eine Fördereinrichtung zur Längsförderung der Fische. Ferner umfasst die vorliegende Erfindung eine Vorrichtung zum Erkennen der Bauch-/Rückenlage von in Fischlängsrichtung geförderten Fischen sowie eine Vorrichtung zum Überwachen der lagegerechten Übergabe von Fischen von einem Querförderer an mindestens eine Fördereinrichtung zur Längsförderung der Fische.

Derartige Vorrichtungen und Verfahren kommen insbesondere dann zum Einsatz, wenn die Ausrichtung der Fische für die Bearbeitung bzw. automatische Verarbeitung in nachfolgenden Fischbearbeitungsmaschinen relevant ist. Es ist daher von großer Bedeutung, die korrekte Bauch-/Rückenlage automatisch erkennen und beim Feststellen einer Fehllage die entsprechenden Fische von der Bearbeitungslinie entfernen zu können.

DE 10 2005 007150 A1 offenbart eine Vorrichtung zur Erkennung der Ausrichtung/Lage von Fischen auf einem Transportelement.

Bekannte Vorrichtungen und Verfahren zur Lageerkennung basieren in der Regel darauf, dass die Fische mittels eines Kamerasystems erfasst werden und aus den so gewonnenen Bilddaten mittels entsprechender Algorithmen die korrekte Lage bzw. Ausrichtung der Fische überprüft wird. Nachteilig hieran ist, dass derartige Bilderkennungssysteme einerseits mit hohen Kosten verbunden und andererseits aufgrund der komplexen Bildauswertealgorithmen sehr rechenintensiv sind. Der hohe Komplexitätsgrad der Bildauswertealgorithmen führt unter anderem dazu, dass die zu ermittelnde Lage der Fische eine gewisse Zeit in Anspruch nimmt. Insbesondere bei den heute geforderten hohen Durchsatzleistungen von Fischbearbeitungsmaschinen, die mit entsprechenden großen Fördergeschwindigkeiten einhergehen, stehen für die Auswertung der aufgenommenen Bilddaten zur Lageermittlung immer kürzere Zeiträume zur Verfügung. Dies führt dazu, dass häufig der erforderliche Rechenzeit zur Auswertung der Bilddaten hohe Fördergeschwindigkeiten entgegenstehen und damit letztlich die Gesamtdurchsatzleistung beschränken. Es ist daher Aufgabe der vorliegenden Erfindung, entsprechende Vorrichtungen bzw. Verfahren vorzuschlagen, die eine möglichst rasche Erkennung der Bauch-/Rückenlage von Fischen bei zugleich hoher Verlässlichkeit ermöglichen.

Die Aufgabe wird durch das eingangs genannte Verfahren gelöst, wobei das Verfahren die folgenden Schritte umfasst:
Fördern der Fische mittels der Fördereinrichtung in Fischlängsrichtung, paariges optisches Abtasten von Bauchseite und Rückenseite der Fische zum Ermitteln eines ersten Helligkeitswerteverlaufs einer ersten Seite und eines zweiten Helligkeitswerteverlaufs einer zweiten Seite jeweils eines der Fische mittels optischer Abtastmittel, Ermitteln einer ersten geordneten Datenreihe und einer zweiten geordneten Datenreihe jeweils durch Ordnen von Helligkeitswerten des ersten Helligkeitswerteverlaufs und des zweiten Helligkeitswerteverlaufs nach einem vorgegebenen Ordnungskriterium, wobei das Ordnen der ersten geordneten Datenreihe und der zweiten geordneten Datenreihe der Größe nach erfolgt, Bestimmen eines ersten Zentralwertes aus der ersten geordneten Datenreihe und eines zweiten Zentralwertes aus der zweiten geordneten Datenreihe, wobei als der erste Zentralwert ein erster Median der ersten geordneten Datenreihe und als der zweite Zentralwert ein zweiter Median der zweiten geordneten Datenreihe ermittelt wird, Ermitteln mindestens eines Differenzwertes aus dem ersten Zentralwert und dem zweiten Zentralwert, und Ermitteln der Bauch-/Rückenlage durch Vergleichen des mindestens einen Differenzwertes mit mindestens einem vorbestimmten Referenzwert.

Erfindungsgemäß umfasst das Ordnungskriterium jedenfalls eine Vorschrift zur Sortierung der Daten bzw. der Helligkeitswerte der Größe nach,da das Ordnen der ersten geordneten Datenreihe und der zweiten geordneten Datenreihe der Größe nach erfolgt,

Durch das erfindungsgemäße Ermitteln eines ersten Medians als erster Zentralwert der ersten geordneten Datenreihe und eines zweiten Medians als zweiter Zentralwert der zweiten geordneten Datenreihe, werden aus den ersten geordneten Datenreihen und den zweiten geordneten Datenreihen diejenigen Helligkeitswerte herausgegriffen, deren Signifikanz für die Bauch-/Rückenlagerkennung am höchsten ist. Mögliche Messfehler sowie optische Störungen wirken sich so keinesfalls negativ auf die Güte der Lageerkennung aus. Ein weiterer Vorteil besteht darin, dass das Herausgreifen der genannten Zentralwerte und deren Heranziehung zur Erkennung der Bauch-/Rückenlage den erforderlichen Rechenaufwand auf ein Minimum reduziert, so dass - bei stets hoher Erkennungsgenauigkeit - das Feststellen der Bauch-/Rückenlage der Fische innerhalb kürzester Zeit möglich wird.

Das erfindungsgemäße Verfahren bietet den Vorteil, dass dieses eine geringe algorithmische Komplexität aufweist und daher die Bauch-/Rückenlage innerhalb kürzester Zeit ermittelt wird. Es ist daher erstmals möglich, die Bauch-/Rückenlagenerkennung unmittelbar vor der nachfolgenden Fischbearbeitungsmaschine auszuführen, da aufgrund der verhältnismäßig kurzen Auswertedauer eine mögliche Fehllage der Fische unmittelbar vor der Fischbearbeitungsmaschine erkannt und der jeweilige Fisch sofort ausgeschleust werden kann.

Die genannten Helligkeitswerteverläufe umfassen jeweils mit den optischen Sensormitteln erfassten Helligkeitswerte der Bauch- bzw. Rückenseite des jeweils abgetasteten Fisches.

Eine weitere bevorzugte Ausbildung der Erfindung zeichnet sich dadurch aus, dass das paarige optische Abtasten mittels jeweils einander gegenüberliegenden optischen Abtastmitteln erfolgt. Auf diese Weise wird auch bei einer nicht exakten Ausrichtung der Fische in der Fischlängsrichtung eine hohe Zuverlässigkeit der Bauch-/Rückenlageerkennung gewährleistet. Grundsätzlich werden die Fische mittels der Fördereinrichtung in der Fischlängsrichtung, also kopf- oder schwanzvoraus, gefördert.

Gemäß einer zweckmäßigen Ausgestaltung der Erfindung erfolgt das paarige optische Abtasten mittels Laserlicht. Anders ausgedrückt werden die Bauch- bzw.- Rückenseite der Fische mit Laserlicht beaufschlagt. Aufgrund der hohen Intensität des Laserlichts weisen auch die von der Bauch- bzw.- Rückenseite der Fische reflektierten Lichtanteile hohe Kontrastverhältnisse auf, die mit den optischen Abtastmitteln erfasst werden. Aufgrund der hohen Kontrastverhältnisse und der damit verbundenen Lichtmengen sind hohe Fördergeschwindigkeiten realisierbar, bei gleichbleibend hoher Bauch-/Rückenlagenerkennungsgenauigkeit.

Eine weiter zweckmäßige Ausgestaltung der Erfindung sieht vor, dass das paarige optische Abtasten mittels Licht im Rot- oder Infrarotwellenlängenbereich erfolgt. Gemäß einer weiteren vorteilhaften Ausführung der Erfindung wird die ermittelte Bauch-Rückenlage mit einer vorgegebenen Solllage verglichen und, sofern die ermittelte Bauch-/ Rückenlage nicht mit der vorgegebenen Solllage übereinstimmt, der jeweilige der Fische von der Fördereinrichtung durch Ausschleusen entfernt.

Des Weiteren wird die Aufgabe durch ein entsprechendes Verfahren mit den eingangs genannten Merkmalen gelöst, wobei das Verfahren die folgenden Schritte umfasst:
Querfördern der Fische mittels des Querförderers quer zur Fischlängsrichtung, Überführen der Fische auf die mindestens eine zum Fördern der Fische in der Fischlängsrichtung eingerichteten Fördereinrichtung, wobei das Überwachen der lagegerechten Übergabe mittels des eingangs genannten Verfahrens zur Erkennung der Bauch-/Rückenlage ausgeführt wird. Durch hohe Erkennungsgeschwindigkeit der Bauch-/Rückenlage, ist es erstmals möglich, die Bauch-/Rückenlageerkennung nach der Übergabe der Fische von dem Querförderer an die Fördereinrichtung zur Längsförderung der Fische auszuführen. Die Bauch-/Rückenlageerkennung findet damit im Bereich der Fördereinrichtungen kurz vor dem Eintritt der Fische in die damit zu beschickende nachgeordnete Fischbearbeitungsmaschine statt.

Die Aufgabe wird weiter durch die eingangs genannte Vorrichtung zum Erkennen der Bauch-/Rückenlage von in Fischlängsrichtung geförderten Fischen gelöst, wobei die Vorrichtung umfasst:
eine zum Fördern der Fische in Fischlängsrichtung eingerichtete Fördereinrichtung, optische Abtastmittel, die zum paarigen optischen Abtasten von Bauchseite und Rückenseite der Fische und zum Ermitteln eines ersten Helligkeitswerteverlaufs einer ersten Seite und eines zweiten Helligkeitswerteverlaufs einer zweiten Seite jeweils eines der Fische, ausgebildet und eingerichtet sind, eine Auswerteeinrichtung, die eingerichtet ist, eine erste geordnete Datenreihe und eine zweite geordnete Datenreihe jeweils durch Ordnen von Helligkeitswerten des ersten Helligkeitswerteverlaufs und des zweiten Helligkeitswerteverlaufs nach einem vorgegebenen Ordnungskriterium zu ermitteln, einen ersten Zentralwert aus der ersten geordneten Datenreihe und einen zweiten Zentralwertes aus der zweiten geordneten Datenreihe zu bestimmen und mindestens einen Differenzwert aus dem ersten Zentralwert und dem zweiten Zentralwert zu ermitteln, wobei die Auswerteeinrichtung ferner ausgebildet ist, die Bauch-/Rückenlage durch Vergleichen des mindestens einen Differenzwertes mit mindestens einem vorbestimmten Referenzwert zu ermitteln, und wobei die Auswerteeinrichtung zum Ordnen der ersten geordneten Datenreihe und der zweiten geordneten Datenreihe der Größe nach eingerichtet ist, und wobei die Auswerteeinrichtung ausgebildet, als den ersten Zentralwert einen ersten Median der ersten geordneten Datenreihe und als den zweiten Zentralwert einen zweiten Median der zweiten geordneten Datenreihe zu ermitteln.

Eine zweckmäßige Weiterbildung der Erfindung sieht vor, dass die optischen Abtastmittel jeweils einander gegenüberliegend in der Fördereinrichtung angeordnet sind.

Eine vorteilhafte Ausbildung der Erfindung zeichnet sich dadurch aus, dass die optischen Abtastmittel Laserlichtquellen umfassen.

Eine vorteilhafte Ausgestaltung der Erfindung sieht vor, dass die optischen Abtastmittel zum Abtasten mittels Licht im Rot- oder Infrarot-Wellenlängenbereich eingerichtet sind.

Gemäß einer vorteilhaften Weiterbildung der Erfindung ist vorgesehen, dass die erfindungsgemäße Vorrichtung weiter eine steuerbare eingerichtete Ausschleuseeinrichtung umfasst, wobei die Ausschleuseeinrichtung mit der Auswerteeinrichtung verbunden und eingerichtet ist, die ermittelte Bauch-/Rückenlage mit einer vorgegebenen Solllage zu vergleichen und, sofern die ermittelte Bauch-/Rückenlage nicht mit der vorgegebenen Solllage übereinstimmt, die Ausschleuseeinrichtung zu veranlassen, den jeweiligen der Fische von der Fördereinrichtung durch Ausschleusen zu entfernen.

Des Weiteren wird die Aufgabe durch die eingangs genannte Vorrichtung zum Überwachen der lagegerechten Übergabe von Fischen von einem Querförderer an mindestens eine Fördereinrichtung zur Längsförderung der Fische gelöst. Diese umfasst einen zum Fördern der Fische quer zur Fischlängsrichtung eingerichteten Querförderer, mindestens eine Überführungseinrichtung, die eingerichtet ist, die Fische an die mindestens eine Fördereinrichtung zu überführen sowie eine Vorrichtung zur Erkennung der Bauch-/Rückenlage wie zuvor beschrieben.

Zur Vermeidung von Wiederholungen wird hinsichtlich der Vorteile der erfindungsgemäßen Vorrichtungen auf die zuvor im Zusammenhang mit den jeweiligen Verfahren genannten Vorzüge verwiesen. Die dortigen Ausführungen gelten analog ebenso für die erfindungsgemäßen Vorrichtungen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnungen näher erläutert. In der Zeichnung zeigt:
- Fig. 1: eine perspektivische Ansicht der erfindungsgemäßen Vorrichtung
und
- Fig. 2: eine schematische Darstellung der erfindungsgemäßen Vorrichtung nebst steuerbar eingerichteter Ausschleuseeinrichtung.

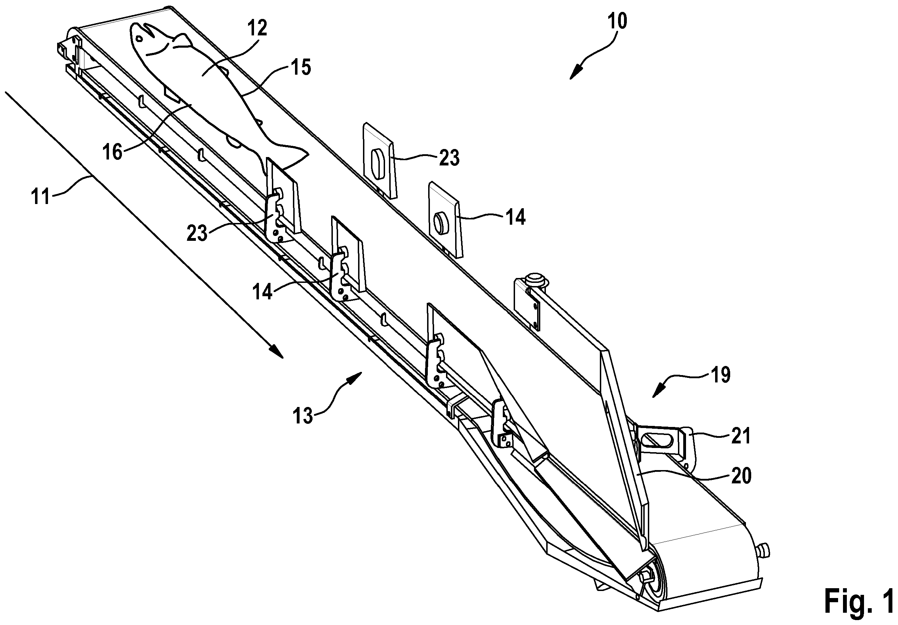

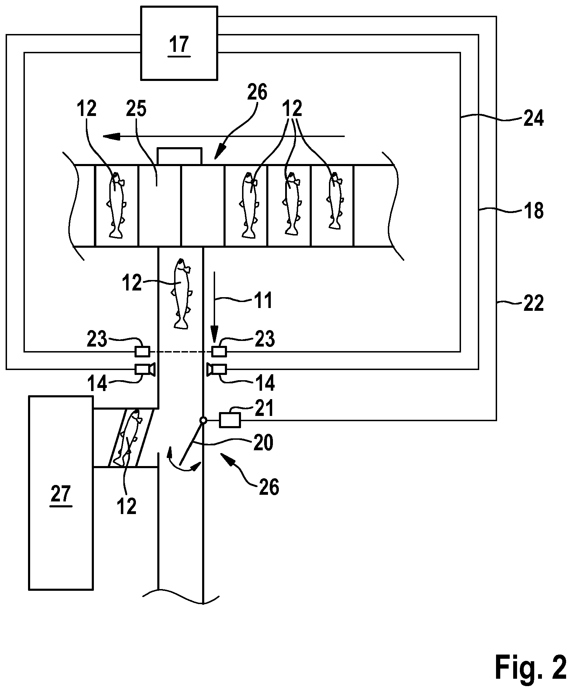

Die erfindungsgemäßen Vorrichtungen sowie die erfindungsgemäßen Verfahren werden im Folgenden anhand der Figuren 1 und 2 näher beschrieben. Fig. 1 zeigt eine Vorrichtung 10 zum Erkennen der Bauch- und Rückenlage von in Fischlängsrichtung 11 geförderten Fischen 12. Die Vorrichtung 10 umfasst eine zum Fördern der Fische 12 in Fischlängsrichtung 11 eingerichtete Fördereinrichtung 13. Die Fischlängsrichtung 11 bezeichnet die Längsachse der Fische 12, also eine gedachte Verbindungslinie zwischen Kopf und Schwanz der Fische 12. Die Fördereinrichtung 13 ist vorzugsweise - wie in der Fig. 1 gezeigt - als endlos umlaufendes Förderband eingerichtet. Die Fische 12 werden mittels der Fördereinrichtung 13 in Fischlängsrichtung 11 gefördert, das heißt entweder Kopf voraus oder Schwanz voraus. Die erfindungsgemäße Vorrichtung umfasst weiter optische Abtastmittel 14, die zum paarigen optischen Abtasten von Bauchseite 15 und Rückenseite 16 der Fische 12 ausgebildet und eingerichtet sind. Die optischen Abtastmittel 14 sind weiter eingerichtet, einen ersten Helligkeitswerteverlauf einer ersten Seite und einen zweiten Helligkeitswerteverlauf einer zweiten Seite jeweils eines der Fische 12 zu ermitteln. Vorzugsweise sind die optischen Abtastmittel 14 jeweils seitlich an der Fördereinrichtung 13 angeordnet, während die Fische 12 mittels der Fördereinrichtung 13 in Längsrichtung gefördert werden.

Bevorzugt sind die optischen Abtastmittel als Kontrastsensoren ausgebildet und eingerichtet, die gemessenen Kontrast- bzw. Helligkeitswerte als analoges oder digitales Signal sequentiell auszugeben.

Die vorliegende Erfindung umfasst weiter eine - in der Fig. 2 gezeigte - Auswerteinrichtung 17, die über entsprechende Signalleitungen 18 mit den optischen Abtastmitteln 14 verbunden sind. Die Auswerteeinrichtung 17 ist eingerichtet, eine erste geordnete Datenreihe und eine zweite geordnete Datenreihe jeweils durch ordnen von Helligkeitswerten des ersten Helligkeitswerteverlaufs und des zweiten Helligkeitswerteverlaufs nach einem vorgegebenen Ordnungskriterium zu ermitteln. Anders ausgedrückt ist die Auswerteeinrichtung 17 ausgebildet, die jeweils aus den mittels der optischen Abtastmitteln 14 erfassten Helligkeitswerten des ersten Helligkeitswerteverlaufs und des zweiten Helligkeitswerteverlaufs entsprechend geordnete Datenreihen zu ermitteln. Die Auswerteeinrichtung 17 ist ferner eingerichtet, aus der ersten geordneten Datenreihe einen ersten Zentralwert zu bestimmen und aus der zweiten geordneten Datenreihe einen zweiten Zentralwert zu ermitteln. Der Zentralwert entspricht einem aus dem jeweiligen Helligkeitswerteverlauf entnommenem Helligkeitswert, wobei die Position des entnommenen Helligkeitswertes aus dem Helligkeitswerteverlauf beliebig vorgebbar ist.

Die Auswerteeinrichtung 17 ist weiter eingerichtet, mindestens einen Differenzwert aus dem ersten Zentralwert und dem zweiten Zentralwert zu ermitteln, und durch Vergleichen des mindestens einen Differenzwertes mit mindestens einem, vorbestimmten Referenzwert die Bauch-/Rückenlage des jeweiligen der Fische 12 zu ermitteln. Aufgrund der unterschiedlich ausgeprägten Helligkeiten von Bauch- und Rückenseite der Fische 12 ist es so möglich, anhand des Differenzwertes zu ermitteln, ob es sich bei der ersten Seite um die Bauchseite 15 oder um die Rückenseite 16 handelt bzw. ob es sich bei der zweiten Seite um die Rückenseite 16 oder die Bauchseite 15 handelt. Eine weitere zweckmäßige Ausgestaltung der Erfindung zeichnet sich dadurch aus, dass die Auswerteeinrichtung zum Ordnen der ersten geordneten Datenreihe und der zweiten geordneten Datenreihe der Größe nach eingerichtet ist. Die Helligkeitswerte des ersten Helligkeitswerteverlaufs bzw. des zweiten Helligkeitswerteverlaufs werden auf diese Weise jeweils der Größe nach geordnet, um so die erste geordnete Datenreihe sowie die zweite geordnete Datenreihe zu ermitteln. Insbesondere ist die Auswerteinrichtung 17 ausgebildet, aus der ersten geordneten Datenreihe als den ersten Zentralwert einen ersten Median zu ermitteln und aus der zweiten geordneten Datenreihe als den zweiten Zentralwert einen zweiten Median zu ermitteln. Anders ausgedrückt ist die Auswerteeinrichtung 17 eingerichtet, aus dem ersten bzw. zweiten Helligkeitswerteverlauf den jeweils an der mittleren Stelle stehenden Helligkeitswert als den ersten Median bzw. als den zweiten Median zu ermitteln. Dies bietet den Vorteil, dass lokal begrenzte Störungen des jeweiligen Helligkeitswerteverlaufs keine unmittelbare Auswirkung auf die Ermittlung der Bauch-/Rückenlage der Fische 12 haben.

Eine weitere zweckmäßige Ausgestaltung der Erfindung sieht vor, dass die optischen Abtastmittel 14 jeweils einander gegenüberliegend an der Fördereinrichtung 13 angeordnet sind. Das paarige optische Abtasten erfolgt daher jeweils mittels der optischen Abtastmittel 14 einander gegenüberliegend.

Weiter bevorzugt umfassen die optischen Abtastmittel Laserlichtquellen. Vorzugsweise sind die Laserlichtquellen als Linienlaser ausgebildet, so dass der Helligkeitsverlauf von Bauch- und Rückenseite der Fische 12 zumindest im Wesentlichen über den gesamten Fischquerschnitt optisch abgetastet wird.

Weiter bevorzugt ist vorgesehen, dass die optischen Abtastmittel 14 zum Abtasten mittels Licht im Rot- oder Infrarot-Wellenlängenbereich eingerichtet sind. Gemäß einer weiteren bevorzugten Ausbildung der Erfindung ist eine steuerbare eingerichtete Ausschleuseeinrichtung 19 vorgesehen, die mit der Auswerteeinrichtung 17 verbunden und derart eingerichtet ist, dass die ermittelte Bauch-/Rückenlage mit einer vorgegebenen Solllage verglichen wird und, sofern die ermittelte Bauch-/Rückenlage nicht mit der vorgegebenen Solllage übereinstimmt, die Ausschleuseeinrichtung 19 zu veranlassen, den jeweiligen der Fische 12 von der Fördereinrichtung 13 durch Ausschleusen zu entfernen. Hierzu ist beispielsweise ein schwenkbares Abweiserelement 20 vorgesehen, das mittels eines Aktors 21 steuerbeweglich eingerichtet ist. Der Aktor 21 ist mit einer weiteren Signalleitung 22 mit der Auswerteeinrichtung 17 verbunden, so dass in dem Fall einer erkannten Bauch/-Rückenfehllage das Abweiserelement 20 der Ausschleuseeinrichtung 19 veranlasst wird, den jeweiligen der Fische 12 auszuschleusen.

Optional ist an der Fördereinrichtung 13 eine Lichtschranke 23 angeordnet, mittels derer das Passieren eines Fisches 12 im Bereich der optischen Abtastmittel 14 erkannt wird. Die Lichtschranke 23 ist vorzugsweise mit einer Signalleitung 24 mit der Auswerteeinrichtung 17 hierzu verbunden.

Anhand der Fig. 2 soll im Folgenden die erfindungsgemäße Vorrichtung 10 sowie das erfindungsgemäße Verfahren zum Überwachen der lagegerechten Übergabe der Fische 12 von einem Querförderer 25 an die mindestens eine Fördereinrichtung 13 zur Längsförderung der Fische 12 näher erläutert werden. Mittels einer - in der Fig. 2 nur schematisch angedeuteten - Überführungseinrichtung 26, die eingerichtet ist, die Fische 12 an die mindestens eine Fördereinrichtung 13 zu überführen, werden die Fische 12 von dem Querförderer 25 abgenommen und nun mittels der Fördereinrichtung 13 in Fischlängsrichtung gefördert. Mittels der eingangs beschriebenen Vorrichtung 10 zur Erkennung der Bauch-/Rückenlage können etwaige beim Überführen der Fische von dem Querförderer 25 auf die mindestens eine Fördereinrichtung 13 auftretende Fehlorientierungen der Fische 12 zuverlässig erkannt und gegebenenfalls Fische 12, deren Bauch-/Rückenlage-Ausrichtung bei der Längsförderung nicht der gewünschten Solllage entspricht, automatische erkannt und mittels der Ausschleuseeinrichtung 19 in die Sammeleinrichtung 27 ausgeschleust werden. Die ausgeschleusten Fische 12 in der Sammeleinrichtung 27 können sowohl manuell als auch automatisch, beispielsweise durch eine - in den Figuren nicht gezeigte - Rückführeinrichtung dem Förder- bzw. Verarbeitungsprozess wieder zugeführt werden.

Gemäß einer - in der Zeichnung nicht im Detail gezeigten - weiteren vorteilhaften Ausbildung der Erfindung werden diejenigen der Fische 12, die die gewünschte Bauch-/Rückenlage aufweisen, mittels eines steuerbeweglichen Verteilelements von der Fördereinrichtung 13 seitlich abgenommen und einer nachgeordneten Fischbearbeitungsmaschine zugeführt. Entspricht die ermittele Bauch-/Rückenlage nicht der Vorgabe, wird der entsprechende der Fische 12 mittels des Verteilelements auf der Fördereinrichtung 13 belassen, also der Fischbearbeitungsmaschine nicht zugeführt.

## Patentansprüche

1. Verfahren zur Erkennung der Bauch-/Rückenlage von mittels einer Fördereinrichtung (13) geförderten Fischen (12), umfassend die Schritte:
- Fördern der Fische (12) mittels der Fördereinrichtung (13) in Fischlängsrichtung (11),
- paariges optisches Abtasten von Bauchseite (15) und Rückenseite (16) der Fische (12) zum Ermitteln eines ersten Helligkeitswerteverlaufs einer ersten Seite und eines zweiten Helligkeitswerteverlaufs einer zweiten Seite jeweils eines der Fische (12) mittels optischer Abtastmittel (14),
- Ermitteln einer ersten geordneten Datenreihe und einer zweiten geordneten Datenreihe jeweils durch Ordnen von Helligkeitswerten des ersten Helligkeitswerteverlaufs und des zweiten Helligkeitswerteverlaufs nach einem vorgegebenen Ordnungskriterium, wobei das Ordnen der ersten geordneten Datenreihe und der zweiten geordneten Datenreihe der Größe nach erfolgt,
- Bestimmen eines ersten Zentralwertes aus der ersten geordneten Datenreihe und eines zweiten Zentralwertes aus der zweiten geordneten Datenreihe, wobei als der erste Zentralwert ein erster Median der ersten geordneten Datenreihe und als der zweite Zentralwert ein zweiter Median der zweiten geordneten Datenreihe ermittelt wird,
- Ermitteln mindestens eines Differenzwertes aus dem ersten Zentralwert und dem zweiten Zentralwert
und
- Ermitteln der Bauch-/Rückenlage durch Vergleichen des mindestens einen Differenzwertes mit mindestens einem vorbestimmten Referenzwert.

2. Verfahren nach Anspruch 1, **dadurch gekennzeichnet, dass** das paarige optische Abtasten jeweils einander gegenüberliegendend mittels der optischen Abtastmittel (14) erfolgt.

3. Verfahren nach Anspruch 1 oder 2, **dadurch gekennzeichnet, dass** das paarige optische Abtasten mittels Laserlicht erfolgt.

4. Verfahren nach einem der Ansprüche 1 bis 3, **dadurch gekennzeichnet, dass** paarige optische Abtasten mittels Licht im Rot- oder Infrarotwellenlängenbereich erfolgt.

5. Verfahren nach einem der Ansprüche 1 bis 4, **dadurch gekennzeichnet, dass** die ermittelte Bauch-/Rückenlage mit einer vorgegebenen Solllage verglichen wird und, sofern die ermittelte Bauch-/Rückenlage nicht mit der vorgegebenen Solllage übereinstimmt, der jeweilige der Fische (12) von der Fördereinrichtung (13) durch Ausschleusen entfernt wird.

6. Verfahren zum Überwachen der lagegerechten Übergabe von Fischen (12) von einem Querförderer (25) an mindestens eine Fördereinrichtung (13) zur Längsförderung der Fische (12), umfassend die Schritte:
- Querfördern der Fische mittels des Querförderers (25) quer zur Fischlängsrichtung (11),
- Überführen der Fische (12) auf die mindestens eine zum Fördern der Fische (12) in der Fischlängsrichtung (11) eingerichteten Fördereinrichtung (13), wobei
das Überwachen der lagegerechten Übergabe mittels eines Verfahrens zur Erkennung der Bauch-/Rückenlage nach einem der Ansprüche 1 bis 5 erfolgt.

7. Vorrichtung zur Erkennung der Bauch-/Rückenlage von in Fischlängsrichtung (11) geförderten Fischen (12), umfassend
eine zum Fördern der Fische (12) in Fischlängsrichtung (11) eingerichtete Fördereinrichtung (13),
optische Abtastmittel (14), die zum paarigen optischen Abtasten von Bauchseite (15) und Rückenseite (16) der Fische (12) und zum Ermitteln eines ersten Helligkeitswerteverlaufs einer ersten Seite und eines zweiten Helligkeitswerteverlaufs einer zweiten Seite jeweils eines der Fische (12), ausgebildet und eingerichtet sind,
eine Auswerteeinrichtung (17), die eingerichtet ist,
- eine erste geordnete Datenreihe und eine zweite geordnete Datenreihe jeweils durch Ordnen von Helligkeitswerten des ersten Helligkeitswerteverlaufs und des zweiten Helligkeitswerteverlaufs nach einem vorgegebenen Ordnungskriterium zu ermitteln,
- einen ersten Zentralwert aus der ersten geordneten Datenreihe und einen zweiten Zentralwert aus der zweiten geordneten Datenreihe zu bestimmen und
- mindestens einen Differenzwert aus dem ersten Zentralwert und dem zweiten Zentralwert zu ermitteln,
wobei die Auswerteeinrichtung ferner ausgebildet ist, die Bauch-/Rückenlage durch Vergleichen des mindestens einen Differenzwertes mit mindestens einem vorbestimmten Referenzwert zu ermitteln, **dadurch gekennzeichnet, dass** die Auswerteeinrichtung (17) zum Ordnen der ersten geordneten Datenreihe und der
zweiten geordneten Datenreihe der Größe nach eingerichtet ist, und dass die Auswerteeinrichtung (17) ausgebildet ist, als den ersten Zentralwert einen ersten
Median der ersten geordneten Datenreihe und als den zweite Zentralwert einen zweiten Median der zweiten geordneten Datenreihe zu ermitteln.

8. Vorrichtung nach Anspruch 7, **dadurch gekennzeichnet, dass** die optischen Abtastmittel (14) jeweils einander gegenüberliegend an der Fördereinrichtung (13) angeordnet sind.

9. Vorrichtung nach Anspruch 7 oder 8, **dadurch gekennzeichnet, dass** die optischen Abtastmittel (14) Laserlichtquellen umfassen.

10. Vorrichtung nach einem der der Ansprüche 7 bis 9, **dadurch gekennzeichnet, dass** die optischen Abtastmittel (14) zum Abtasten mittels Licht im Rot- oder Infrarotwellenlängenbereich eingerichtet sind.

11. Vorrichtung nach einem der Ansprüche 7 bis 10 weiter umfassend eine steuerbar eingerichtete Ausschleuseeinrichtung (19), wobei die Ausschleuseeinrichtung (19) mit der Auswerteeinrichtung (17) verbunden und eingerichtet ist, die ermittelte Bauch-/Rückenlage mit einer vorgegebenen Solllage zu vergleichen und, sofern die ermittelte Bauch-/Rückenlage nicht mit der vorgegebenen Solllage übereinstimmt, die Ausschleuseeinrichtung (19) zu veranlassen, den jeweiligen der Fische (12) von der Fördereinrichtung (13) durch Ausschleusen zu entfernen.

12. Vorrichtung zum Überwachen der lagegerechten Übergabe von Fischen (12)
von einem Querförderer (25) an mindestens eine Fördereinrichtung (13) zur Längsförderung der Fische (12), umfassend
einen zum Fördern der Fische (12) quer zur Fischlängsrichtung (11) eingerichteten Querförderer (25),
mindestens eine Überführungseinrichtung (26), die eingerichtet ist, die Fische (12) an die mindestens eine Fördereinrichtung (13) zu überführen sowie
eine Vorrichtung (10) zur Erkennung der Bauch-/Rückenlage nach einem der Ansprüche 7 bis 11.

## Claims

1. Method for detecting the prone/supine position of fish (12) conveyed by means of a conveying device (13), comprising the steps:
- conveying the fish (12) by means of the conveying device (13) in the longitudinal direction (11) of the fish,
- optically scanning the ventral side (15) and dorsal side (16) of the fish (12) as a pair in order to determine a first brightness value profile of a first side and a second brightness value profile of a second side of one of the fish (12), each, by means of optical scanning means (14),
- determining a first ordered data series and a second ordered data series by ordering brightness values of the first brightness value profile and of the second brightness value profile according to a predefined ordering criterion, wherein the first ordered data series and the second ordered data series are ordered by size,
- determining a first median from the first ordered data series and a second median from the second ordered data series, wherein as the first median, a first central value of the first ordered data series is determined, and as the second median, a second central value of the second ordered data series is determined,
- determining at least one differential value from the first median and the second median,
and
- determining the prone/supine position by comparing the at least one differential value with at least one predetermined reference value.

2. Method according to claim 1, **characterised in that** the paired optical scanning takes place by means of mutually opposing optical scanning means (14).

3. Method according to claim 1 or 2, **characterised in that** the paired optical scanning takes place by means of laser light.

4. Method according to any one of claims 1 to 3, **characterised in that** the paired optical scanning takes place by means of light in the red or infrared wavelength range.

5. Method according to any one of claims 1 to 4, **characterised in that** the determined prone/supine position is compared with the predefined nominal position and, if the determined prone/supine position does not correspond to the predefined nominal position, the respective fish (12) is removed from the conveying device (13) by ejection.

6. Method for monitoring the positionally correct transfer of fish (12) from a transverse conveyor (25) to at least one conveying device (13) for conveying the fish (12) longitudinally, comprising the steps:
- transverse conveying of the fish by means of the transverse conveyor (25) transversely to the longitudinal direction (11) of the fish,
- transfer of the fish (12) to the at least one conveying device (13) which is configured to convey the fish (12) in the longitudinal direction (11) of the fish,
wherein the monitoring of the positionally correct transfer takes place using a method for detecting the prone/supine position according to any one of claims 1 to 5.

7. Apparatus for detecting the prone/supine position of fish (12) conveyed in the longitudinal direction (11) of the fish, comprising
a conveying device (13) configured to convey the fish (12) in the longitudinal direction (11) of the fish,
optical scanning means (14) which are designed and configured for optically scanning the ventral side (15) and the dorsal side (16) of the fish (12) as a pair, and for determining a first brightness value profile of a first side and a second brightness value profile of a second side of a respective fish (12),
an evaluation device (17), which is configured to:
- determine a first ordered data series and a second ordered data series by ordering brightness values of the first brightness value profile and the second brightness value profile according to a predefined ordering criterion,
- determine a first median from the first ordered data series and a second median from the second ordered data series, and
- determine at least one differential value from the first median and the second median,
wherein the evaluation device is furthermore configured to determine the prone/supine position by comparing the at least one differential value with at least one predefined reference value, **characterized in that** the evaluation device (17) is configured to order the first ordered data series and the second ordered data series by size, and that the evaluation device (17) is configured to determine, as the first median, a first central value of the first ordered data series, and as the second median, a second central value of the second ordered data series.

8. Apparatus according to claim 7, **characterised in that** the optical scanning means (14) are arranged opposite each other on the conveying device (13).

9. Apparatus according to claim 7 or 8, **characterised in that** the optical scanning means (14) comprise laser light sources.

10. Apparatus according to any one of claims 7 to 9, **characterised in that** the optical scanning means (14) are configured to scan by means of light in the red or infrared wavelength range.

11. Apparatus according to any one of claims 7 to 10, furthermore comprising a discharge device (19) which is configured so as to be controllable, wherein the discharge device (19) is connected to the evaluation device (17) and is configured to compare the determined prone/supine position with a predefined nominal position and, if the determined prone/supine position does not correspond to the predefined nominal position, to cause the discharge device (19) to remove the respective fish (12) from the conveying device (13) by ejection.

12. Apparatus for monitoring the positionally correct transfer of fish (12) from a transverse conveyor (25) to at least one conveying device (13) for conveying the fish (12) longitudinally, comprising:
a transverse conveyor (25) for conveying the fish (12) transversely to the longitudinal direction (11) of the fish,
at least one transfer device (26) which is configured to transfer the fish (12) to the at least one conveying device (13), and
a device (10) for detecting the prone/supine position according to any one of claims 7 to 11.

## Revendications

1. Procédé pour identifier la position ventrale/dorsale de poissons (12) transportés au moyen d'un dispositif de transport (13), comprenant les étapes suivantes :
- le transport des poissons (12) au moyen du dispositif de transport (13) dans la direction longitudinale des poissons (11),
- le balayage optique par paires du côté ventral (15) et du côté dorsal (16) des poissons (12) pour déterminer une première courbe de valeurs de luminosité d'un premier côté et une deuxième courbe de valeurs de luminosité d'un deuxième côté de chacun des poissons (12) au moyen de moyens de balayage optique (14),
- la détermination d'une première série de données ordonnées et d'une deuxième série de données ordonnées respectivement par ordonnement de valeurs de luminosité de la première courbe de valeurs de luminosité et de la deuxième courbe de valeurs de luminosité selon un critère d'ordonnement prédéfini, l'ordonnement de la première série de données ordonnées et de la deuxième série de données ordonnées s'effectuant selon la taille,
- la détermination d'une première valeur centrale à partir de la première série de données ordonnées et d'une deuxième valeur centrale à partir de la deuxième série de données ordonnées, une première médiane de la première série de données ordonnées étant déterminée en tant que première valeur centrale et une deuxième médiane de la deuxième série de données ordonnées étant déterminée en tant que deuxième valeur centrale,
- la détermination d'au moins une valeur de différence entre la première valeur centrale et la deuxième valeur centrale
et
- la détermination de la position ventrale/dorsale en comparant l'au moins une valeur de différence à au moins une valeur de référence prédéterminée.

2. Procédé selon la revendication 1, **caractérisé en ce que** le balayage optique par paires est effectué au moyen des moyens de balayage optique (14) respectivement en face les uns des autres.

3. Procédé selon la revendication 1 ou 2, **caractérisé en ce que** le balayage optique par paires est effectué au moyen d'une lumière laser.

4. Procédé selon l'une quelconque des revendications 1 à 3, **caractérisé en ce qu'**un balayage optique par paires est effectué au moyen d'une lumière dans la plage de longueurs d'onde rouge ou infrarouge.

5. Procédé selon l'une quelconque des revendications 1 à 4 , **caractérisé en ce que** la position ventrale/dorsale déterminée est comparée à une position de consigne prédéfinie et, dans la mesure où la position ventrale/dorsale déterminée ne correspond pas à la position de consigne prédéfinie, le poisson respectif parmi les poissons (12) est retiré du dispositif de transport (13) par éclusage.

6. Procédé pour surveiller le transfert en position correcte de poissons (12) d'un transporteur transversal (25) à au moins un dispositif de transport (13) pour le transport longitudinal des poissons (12), comprenant les étapes suivantes :
- le transport transversal des poissons au moyen du transporteur transversal (25) transversalement à la direction longitudinale des poissons (11),
- le transfert des poissons (12) sur l'au moins un dispositif de transport (13) adapté pour transporter les poissons (12) dans la direction longitudinale des poissons (11),
la surveillance du transfert en position correcte s'effectuant au moyen d'un procédé pour identifier la position ventrale/dorsale selon l'une quelconque des revendications 1 à 5.

7. Dispositif pour identifier la position ventrale/dorsale de poissons (12) transportés dans la direction longitudinale des poissons (11), comprenant :
un dispositif de transport (13) adapté pour transporter les poissons (12) dans la direction longitudinale des poissons (11),
des moyens de balayage optique (14), qui sont configurés et adaptés pour le balayage optique par paires du côté ventral (15) et du côté dorsal (16) des poissons (12) et pour déterminer une première courbe de valeurs de luminosité d'un premier côté et une deuxième courbe de valeurs de luminosité d'un deuxième côté de chacun des poissons (12),
un dispositif d'évaluation (17), qui est adapté
- pour déterminer une première série de données ordonnées et une deuxième série de données ordonnées respectivement en ordonnant des valeurs de luminosité de la première courbe de valeurs de luminosité et de la deuxième courbe de valeurs de luminosité selon un critère d'ordre prédéfini,
- pour déterminer une première valeur centrale à partir de la première série de données ordonnées et une deuxième valeur centrale à partir de la deuxième série de données ordonnées, et
- pour déterminer au moins une valeur de différence entre la première valeur centrale et la deuxième valeur centrale,
le dispositif d'évaluation étant en outre configuré pour déterminer la position ventrale/dorsale en comparant l'au moins une valeur de différence à au moins
une valeur de référence prédéterminée, **caractérisé en ce que** le dispositif d'évaluation (17) est adapté pour ordonner la première série de données
ordonnées et la deuxième série de données ordonnées en fonction de la taille, et **en ce que**
le dispositif d'évaluation (17) est configuré pour déterminer une première médiane de la première série de données ordonnées en tant que première valeur centrale et une deuxième médiane de la deuxième série de données ordonnées en tant que deuxième valeur centrale.

8. Dispositif selon la revendication 7, **caractérisé en ce que** les moyens de balayage optique (14) sont agencés respectivement en face les uns des autres sur le dispositif de transport (13).

9. Dispositif selon la revendication 7 ou 8, **caractérisé en ce que** les moyens de balayage optique (14) comprennent des sources de lumière laser.

10. Dispositif selon l'une quelconque des revendications 7 à 9, **caractérisé en ce que** les moyens de balayage optique (14) sont adaptés pour le balayage au moyen d'une lumière dans la plage de longueurs d'onde rouge ou infrarouge.

11. Dispositif selon l'une quelconque des revendications 7 à 10, comprenant en outre un dispositif d'éclusage (19) adapté pour pouvoir être commandé, le dispositif d'éclusage (19) étant relié au dispositif d'évaluation (17) et étant adapté pour comparer la position ventrale/dorsale déterminée à une position de consigne prédéterminée et, dans la mesure où la position ventrale/dorsale déterminée ne correspond pas à la position de consigne prédéterminée, à amener le dispositif d'éclusage (19) à retirer le poisson respectif parmi les poissons (12) du dispositif de transport (13) par éclusage.

12. Dispositif pour surveiller le transfert en position correcte de poissons (12) d'un transporteur transversal (25) à au moins un dispositif de transport (13) pour le transport longitudinal des poissons (12), comprenant :
un transporteur transversal (25) adapté pour transporter les poissons (12) transversalement à la direction longitudinale des poissons (11),
au moins un dispositif de transfert (26), qui est adapté pour transférer les poissons (12) vers l'au moins un dispositif de transport (13), ainsi que
un dispositif (10) pour identifier la position ventrale/dorsale selon l'une quelconque des revendications 7 à 11.
